# EUROPEAN PATENT SPECIFICATION

(11) **EP 1 301 115 B1**
(45) Date of publication and mention of the grant of the patent: **09.08.2006**
(21) Application number: 01943193.1
(22) Date of filing: 22.06.2001
(51) Int. Cl.: A47L 13/22, A47L 13/58, A47J 47/18

(54) **CLEANING BUCKET**
PUTZEIMER
SEAU DE NETTOYAGE

(30) Priority: 23.06.2000 DK 200000979
(43) Date of publication of application: 16.04.2003
(73) Proprietor: Fyns Udvikling ApS, 6710 Esbjerg V (DK)
(72) Inventor: TOXVAERD-LARSEN, Hans Lauritz, 5610 Assens (DK)
(74) Representative: Nielsen, Leif
(86) International application number: PCT/DK2001/000440
(87) International publication number: WO 2002/000089

(56) References cited:
- EP-A2- 0 781 524
- DE-A1- 19 521 341
- ES-U- 263 453
- GB-A- 1 520 839
- MC-A- 920

## Description

The present invention concerns a cleaning bucket for use in connection with the wet-mopping of floors.

Especially in countries with a tradition for tiled floors in private homes, offices etc., there is a correspondingly widespread tradition that the cleaning of the floor is effected with ordinary, shaft-mounted mops which are dipped in a bucket of water and thereafter used for a certain time, after which they are again dipped in the bucket for cleaning of the mop and the subsequent application of the mop with new, clean or reasonably clean water to the floor. However, it is commonly experienced that the water in the bucket is no longer "reasonably" clean after the mop has been dipped only quite few times in the bucket, which means that it is customary to carry out frequent replacement of the water in order to achieve a desirably good result of the cleaning.

The invention is based on the fundamental idea that it will be possible to reduce the need for water replacement providing that the dirtied mop can be squeezed-out against a grating surface over a separate container for dirtied water, in that the mop can thereafter be made wet again by being dipped in the clean water and can thus remain effective over an extended period of time. Trials in practice have shown that it is fully realistic to work with a single bucket which is divided into separate compartments for holding clean water and squeezed-out dirtied water respectively.

EP-A-0781524 discloses a device for supplying disinfectant or cleaning liquid to a mop covering fitted over a holder and used for cleaning floors, etc. This publication shows two chambers interconnected with a valve. The valve is normally closed and is opened by a component actuated by the mop. This allows fresh liquid to flow from a storage chamber into a moistening chamber sealed off from it, and in which the mop is nserted. The chambers can be separated by a partition, being connected by a passage for the liquid controlled by the valve. The latter can be mounted in either of the chambers or the partition, which contains an opening through which the component passes.

DE-A-19521341 discloses a unit consisting of a water-permeable support for a suction body operating by a capillary ascension method and holding the wiper cloth on the holder. The support is positioned a little above the bottom of the water-receptacle and is combined with a squeezer. The suction body is made of open-pored foam, fibrous web or gel material.

According to the present invention the cleaning bucket comprises a fixed bottom, a first section intended to accommodate clean washing water, a second section for dirtied water, over which there is provided a grating surface for the wringing-out of the wet, dirtied mop and a third section for receiving the dirtied mop, where the third section stands in connection, with the clean water section through a bottom valve which is activated mechanically for opening by movement of the mop in the third section, said bottom valve comprising a pressure plate is located in said third section in a bottom plate of said third section, which bottom plate defines with the fixed bottom of the bucket a compartment which is in open communication with the clean water section, said pressure plate and said bottom plate are arranged with flow channels for the supply of clean water to the third section.

With the present invention the bucket is arranged with the first section for the clean washing water and a second section for dirty water and said third section especially for receiving the dirtied mop for rinsing this clean before it is reintroduced into the clean water section of the bucket. The third section stands in connection with the clean water section through the bottom valve, which is activated mechanically for opening by the actual introduction of the mop down into this third section. It is hereby achieved that to the third section there will arise a controlled supply of clean water, which after the squeezing-out of the mop will, in the main, be absorbed by this, so that there is no need thereafter to submerge the mop in the remaining cleam water, which will thus remain quite clean and herewith have a prolonging influence on the effective operation time of the bucket aggregate. Moreover, a further effect will thus be that no concentration of dirt will arise in the "dipping section", since the mop at each moistening will itself remove the clean water with which it is moistened and the dirty water is accommodated in the second section. By having flow channels in the activation element, the clean water is led into the mop in an expedient manner, and with the positioning of the bottom valve it is possible to "knead" the mop in the bottom of the bucket - in order to free the dirt - without activation of the bottom valve.

In order to clean the mop, it is normal for this to be slopped up and down as a whole in the water bucket, so that the whole of the mop is re-wetted. This can well involve that more water is brought out than is actually necessary, and that this contributes towards the shortening of the operational life of the bucket filling. By use of the special "dipping section", it is easy to control that the water rises only partly up around the mop, whereby unnecessary waste of water can be avoided. A cleaning bucket according to the invention is provided with a bottom valve, where the bottom valve can be arranged with a pressure plate which can be influenced from above and which is configured with friction ribs on the upper side. There is hereby achieved a natural activation of the valve without the mop sliding away from the pressure plate. In a preferred embodiment, the bottom valve is placed at one of the sides in the third section. In an alternative embodiment, the cleaning bucket can have at least three sections, e.g. four, whereby the possibility arises of being able to provide two different kinds of washing water, for example washing water with two different kinds of soap or the like. With this embodiment, each type of washing water will have its own bottom valve, which for the sake of clarity can be with different colours.

In the following, the invention is explained with reference to the drawing, in which
- Fig. 1: is a perspective view partly in section of an example embodiment of a bucket according to the invention,
- Fig. 2: is a plan view of an alternative embodiment,
- Fig. 3: is a cross-sectional view of a bottom valve in a bucket according to the invention, and
- Fig. 4: is a partial plan view which shows the positioning of a bottom valve.

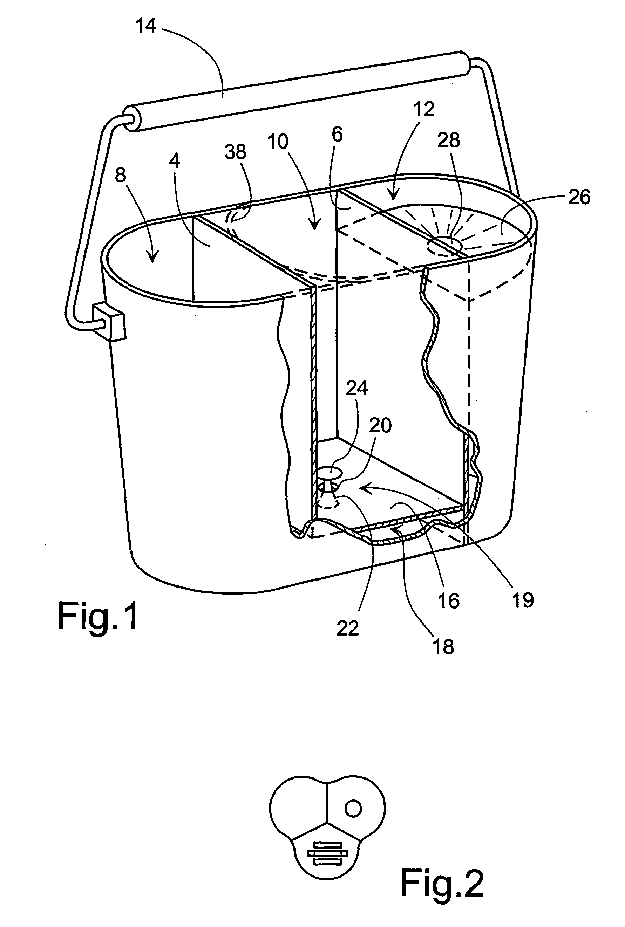

The bucket 2 shown in fig. 1 is configured with an elongated oval shape and is divided into three sections 8, 10 and 12 by means of vertical intermediate walls 4 and 6. The section 8 is a clean water container, while the sections 10 and 12 in the initial situation are empty. The bucket is provided with a longitudinal carrying handle 14 which can fall down around the bucket, and by which the bucket can be carried in the horizontal position even when unevenly loaded with water, in that the user will easily find a gripping position above the overall centre of gravity of the bucket.

The section 10 has a bottom plate 16 disposed at a short distance above the fixed bottom of the bucket, hereby forming a lower compartment 18 which is in open connection with the clean water container 8. At the middle of the bottom plate 16, this is configured with a hole 20 and a number of flow channels. 36 which are normally held closed by means of a lower valve head 22 which is spring-loaded upwards for the closing of the hole 20. A thin rod 32 extends from the valve head up through the bole 20, and which uppermost supports a pressure plate 24 at a certain free height above the plate 16. A pressing-down of the pressure plate 24 will thus result in the opening of the valve 19, and herewith a controlled up-wards ingress of clean water into the section 10 from the container system 8,18. Such an upwards ingress will cease as soon as the downwards pressure on the pressure plate 24 is relieved.

The section 12 is a completely closed container section, which at some distance below its upper edge has a grating plate part 26 inserted with a preferably countersunk downflow opening 28 or corresponding grating slots.

When the bucket is to be used, the section 8 is filled with water, which will herewith also flow into the chamber 18 lowermost in section 10. The associated mop is made wet in the clean water, and when the time comes for a change of water, the mop is pressed down against the plate 26 where it can be "kneaded" for thorough wringing-out of the dirty water, which is thus collected in the container section 12. Thereafter, the mop from which the water has thus been wrung is introduced down into section 10 and pressed against the pressure plate 24, whereby clean water from the chamber 18 flows up to the mop through the valve 19. The sole purpose of this is to wet the mop for a new work cycle, and it will come naturally to the user not to over-flood the mop, since with such regularity the clean water container would quickly be emptied. This form of wetting is quite different from that which otherwise takes place with the slopping of the mop in a bucket of water, where it is natural to dip the whole mop.

Water will gradually be transferred from the section 8 to the section 12, whereby the bucket's centre of gravity will shift. However, the user can easily find a convenient gripping position along the handle 14.

As indicated by the stippled line at 38, the intermediate wall 4 can possibly be configured extending in a convex manner in towards the section 10, whereby the volume of the clean water section 8 can be increased without taking necessary utility space from the section 10. The intermediate wall 6 can be shaped in a corresponding manner.

In fig. 2 the bucket is shown in an embodiment where the three sections are arranged in a circular manner.

For good reasons, the sections 8 and 10 must be in connection with one another, but the section 12 can possibly constitute an independent unit. The invention will also embrace such a two-part embodiment or unit respectively, merely with a combination of the sections 8 and 10.

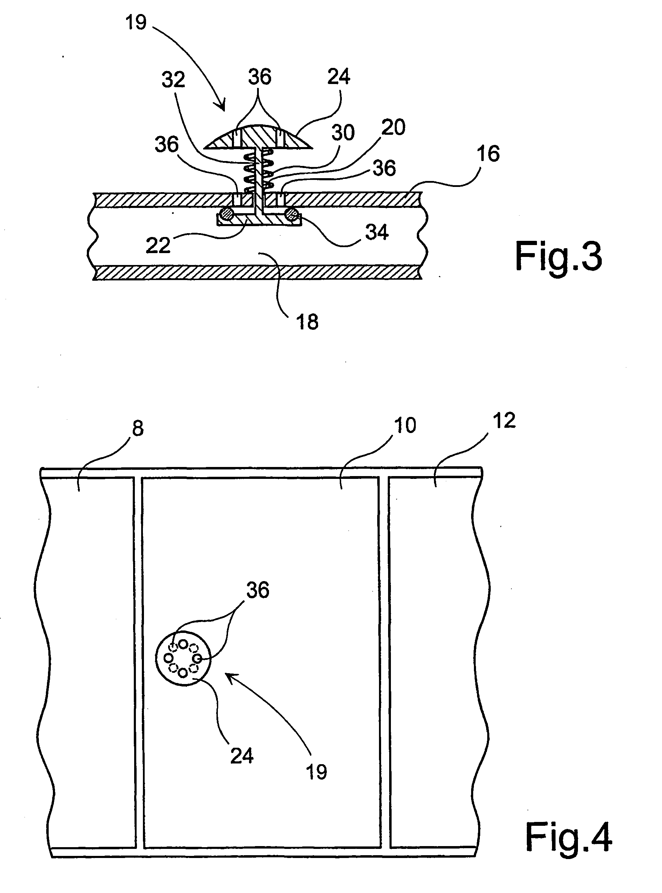

In fig. 3 the bottom valve 19 is seen in section, and which clearly shows the valve mechanism. The valve 19 consists of a pressure plate 24 in which there are flow channels 36, and the pressure plate 24 is connected via a rod 32 through a hole 20 in the bottom plate 16, to a lower valve head 22. The valve 19 is held closed by means of a spring 30 which works between the pressure plate 24 and the bottom plate 16. The lower valve head 22 is arranged with a seal 34, with the effect that the valve 19 closes tightly up against the bottom plate 16. Around the hole 20 there are a number of flow channels 36 which are dimensioned to lead a suitable amount of water through the valve 19 when this is activated.

Fig. 4 is a plan view which shows a possible positioning of a bottom valve 19 in the bottom plate 16 in the third section 10.

## Claims

1. Cleaning bucket (2) for use in connection with the wet-mopping of floors, comprising a fixed bottom, a first section (8) intended to accommodate clean washing water, a second section (12) for dirtied water, over which there is provided a grating surface (26) for the wringing-out of a wet, dirtied mop and a third section (10) for receiving the dirtied mop, where the third section (10) stands in connection with the clean water section (8) through a bottom valve (19) which is activated mechanically for opening by movement of the mop in the third section (10), said bottom valve (19) comprising a pressure plate (24) located in said third section (10) in a bottom plate (16) of said third section (10), which bottom plate (16) defines with the fixed bottom of the bucket a compartment (18) which is in open communication with the first section (8), said pressure plate (24) and said bottom plate (16) comprising flow channels (36) for the supply of clean water to the third section (10).

2. Cleaning bucket according to claim 1, **characterised in that** the pressure plate (24) is arranged with friction ribs.

3. Cleaning bucket according to the claims 1-2, **characterised in that** the bottom valve (19) is placed at one side in the third section (10).

## Patentansprüche

1. Putzeimer (2) für die Verwendung in Verbindung mit dem Nassschwabbeln von Böden, mit einem festen Boden, einem ersten Abschnitt (8), der sauberes Waschwasser aufnehmen soll, einem zweiten Abschnitt (12) für verschmutztes Wasser, über dem eine Gitteroberfläche (26) zum Auswringen eines nassen, verschmutzten Mopps vorgesehen ist, und einem dritten Abschnitt (10) für die Aufnahme des verschmutzten Mopps, wobei der dritte Abschnitt (10) mit dem Abschnitt (8) für sauberes Wasser durch ein Bodenventil (19) in Verbindung steht, das in Öffnungsrichtung mechanisch betätigt wird, indem der Mopp im dritten Abschnitt (10) bewegt wird, wobei das Bodenventil (19) eine Druckplatte (24) ausweist, die sich in dem dritten Abschnitt (10) in einer Bodenplatte (16) des dritten Abschnitts (10) befindet, wobei die Bodenplatte (16) mit dem festen Boden des Eimers ein Fach (18) definiert, das mit dem ersten Abschnitt (8) in einer offenen Verbindung steht, wobei die Druckplatte (24) und die Bodenplatte (16) Strömungskanäle (36) für die Lieferung von sauberem Wasser zu dem dritten Abschnitt (10) umfassen.

2. Putzeimer nach Anspruch 1, **dadurch gekennzeichnet, dass** die Druckplatte (24) mit Reibungsstegen versehen ist.

3. Putzeimer nach Anspruch 1 bis 2, **dadurch gekennzeichnet, dass** das Bodenventil (19) im dritten Abschnitt (10) auf einer Seite angeordnet ist.

## Revendications

1. Seau de nettoyage (2) destiné à être utilisé pour laver les sols au balai à franges, comprenant un fond fixe, une première section (8) destinée à recevoir de l'eau de lavage propre, une deuxième section (12) destinée à l'eau salie, au-dessus de laquelle est prévue une surface de raclage (26) permettant d'essorer un balai à franges mouillé et sali, et une troisième section (10) destinée à recevoir le balai à franges sali, dans lequel la troisième section (10) est reliée à la section contenant l'eau propre (8) par une soupape de fond (19) qui est activée mécaniquement pour s'ouvrir, grâce à un mouvement du balai à franges dans la troisième section (10), la soupape de fond (19) comprenant une plaque d'appui (24) située dans la troisième section (10) dans une plaque de fond (16) de la troisième section (10), la plaque de fond (16) définissant avec le fond fixe du seau un compartiment (18) qui se trouve en communication ouverte avec la première section (8), la plaque d'appui (24) et la plaque de fond (16) comprenant des canaux d'écoulement (36) pour alimenter la troisième section (10) en eau propre.

2. Seau de nettoyage selon la revendication 1, **caractérisé en ce que** la plaque d'appui (24) est pourvue de nervures de friction.

3. Seau de nettoyage selon les revendications 1-2, **caractérisé en ce que** la soupape de fond (19) est disposée sur un côté de la troisième section (10).
